# EUROPEAN PATENT APPLICATION

(11) **EP 2 474 421 A1**
(43) Date of publication of application: **11.07.2012**
(21) Application number: 09848752.3
(22) Date of filing: 31.08.2009
(51) Int. Cl.: B41J 2/045, B41J 2/055

(54) **INKJET PRINTER AND METHOD FOR PRINTING**

(71) Applicant: Mimaki Engineering Co., Ltd., Tomi-shi, Nagano 389-0512 (JP)
(72) Inventor: YOKOYAMA, Kazuhide, Tomi-city Nagano 389-0512 (JP); ONODERA, Akihiro, Hachioji Tokyo 192-0903 (JP); SUGIMOTO, Yoshiro, Hachioji Tokyo 192-0903 (JP)
(74) Representative: Gendron, Vincent Christian
(86) International application number: PCT/JP2009/065190
(87) International publication number: WO 2011/024307

(57) **Abstract**

[Problem] To more appropriately carry out generation of a drive waveform signal used in an actuator drive in an inkjet head.

[Means for Resolution] An inkjet printer (10) that carries out printing by ejecting ink droplets includes an inkjet head (18) having plural nozzles and plural actuators provided corresponding one to each nozzle, a head control digital signal output unit (108) that outputs a head control digital signal, a digital amplifier (14) that outputs an amplified control signal, which is a signal wherein the head control digital signal has been amplified, a smoothing filter (16) that has plural capacitors and, by smoothing the amplified control signal using at least one portion of the plural capacitors, generates a drive waveform signal, and a capacity specification signal output unit (106) that outputs a capacity specification signal specifying capacitors to be used in smoothing the amplified control signal.

## Description

### Technical Field

The present invention relates to an inkjet printer and a printing method.

### Background Art

To date, an inkjet printer wherein an ink droplet is ejected using an actuator such as a piezoelectric element has been widely used. Also, in recent years, the use of a digital amplifier such as a class D amplifier circuit in the generation of a drive waveform signal used in an actuator drive has been considered (for example, refer to Patent Document 1). In this kind of configuration, for example, a drive waveform signal is generated by smoothing a signal amplified in a digital amplifier with a smoothing filter. By using this kind of configuration, it is possible to increase power source efficiency, and to suppress heat generation. Also, because of this, it is possible to reduce the power consumption of the inkjet printer, and to reduce the cost thereof.

### Related Art Documents

### Patent Documents

Patent Document 1: JP-A-2005-329710

### Disclosure of the Invention

### Problems to be Solved by the Invention

However, when attempting to generate a drive waveform signal using a digital amplifier, there is a danger of various problems occurring, caused by, for example, the actuator being a capacitive load, or the like. For example, the number of nozzles simultaneously ejecting an ink droplet in the inkjet printer changes constantly. Because of this, the number of actuators driven in response to the drive waveform signal also changes constantly. Then, as a result of this, the load capacitance changes in accordance with the number of nozzles ejecting an ink droplet.

Also, due to the load capacitance changing, the frequency characteristics of the smoothing filter change. Then, as a result of this, there is a danger of the waveform of the drive waveform signal being affected by a difference in the number of nozzles ejecting an ink droplet. Because of this, for example, a configuration more appropriate to an inkjet printer is desirable as a configuration generating a drive waveform signal using a digital amplifier.

Herein, in the configuration disclosed in Patent Document 1, a control of an operation of the class D amplifier circuit is carried out by, for example, using a feedback circuit. However, for example, when attempting to provide an inkjet printer that carries out a high-definition printing at a low cost, or the like, it may be desirable to carry out a more appropriate control using a simpler configuration.

Also, in the circuit generating a drive waveform signal, a capacitor used in the smoothing filter can be seen as an unnecessary load that also consumes extra current. Because of this, in order to more appropriately carry out a reduction of power consumption, it is desirable to adopt a configuration that does not charge or discharge the capacitor more than necessary. Therefore, the invention has an object of providing an inkjet printer and printing method with which it is possible to solve the heretofore described problems. Means for Solving the Problems

In order to solve the heretofore described problems, the invention has the following configurations.
(Configuration 1) An inkjet printer that carries out printing by ejecting ink droplets includes an inkjet head having plural nozzles and plural actuators provided corresponding one to each nozzle, a head control digital signal output unit that outputs a head control digital signal, which is a digital signal used in controlling an operation of the inkjet, a digital amplifier that, by amplifying the head control digital signal output by the head control digital signal output unit, outputs an amplified control signal, which is a signal wherein the head control digital signal has been amplified, a smoothing filter that has plural capacitors and, by smoothing the amplified control signal using at least one portion of the plural capacitors, generates a drive waveform signal, which is a signal that drives the plural actuators, and a capacity specification signal output unit that outputs a capacity specification signal specifying capacitors, of the plural capacitors in the smoothing filter, to be used in smoothing the amplified control signal, wherein the capacity specification signal output unit, based on the number of the actuators that are to eject an ink droplet in response to the drive waveform signal, decides on capacitors to be used in smoothing the amplified control signal, and outputs the capacity specification signal specifying the capacitors.

The actuators that are to eject an ink droplet are, for example, actuators corresponding to nozzles that are to eject an ink droplet. The actuators are, for example, piezoelectric actuators such as piezoelectric elements. Also, the drive waveform signal is, for example, a signal that changes to a trapezoid form. When the number of actuators that are to eject an ink droplet is equal to or smaller than a preset lower limit number, the capacity specification signal output unit, for example, outputs a capacity specification signal specifying all the capacitors. Also, when the number of actuators that are to eject an ink droplet is greater than the lower limit number, the capacity specification signal output unit, for example, outputs a capacity specification signal specifying a smaller number of capacitors. In this case, the capacity specification signal output unit, for example, specifies capacitors in such a way that the total capacity gradually decreases every time the number of actuators increases by a predetermined number.

When configuring in this way, for example, at a time of a control changing the drive waveform signal, it is possible to appropriately change the capacity of the capacitors used in smoothing in the smoothing filter in accordance with the number of nozzles (the ejection nozzle number) in the inkjet head that are to eject an ink droplet. Because of this, for example, even when the ejection nozzle number changes constantly, it is possible to suppress a change in the frequency characteristics of the smoothing filter, and appropriately prevent the waveform of the drive waveform signal being affected.

Furthermore, by selecting capacitors in accordance with the ejection nozzle number, it is possible to keep the capacity of the capacitors used in the smoothing filter at or under a certain appropriate capacity. Because of this, for example, it is possible to more appropriately carry out a reduction of power consumption. For this reason, when configuring in this way, for example, it is possible to more appropriately carry out the generation of a drive waveform signal used in driving the actuators in the inkjet head.

(Configuration 2) The inkjet head repeatedly ejects an ink droplet from the nozzles, among the plural nozzles, selected at each ejection timing at preset ejection timings, the inkjet printer further includes a counter that counts the number of the nozzles selected at each of the ejection timings, and the capacity specification signal output unit, based on the number of the nozzles counted by the counter, changes the capacity specification signal in accordance with the number of the nozzles selected at each of the ejection timings.

When configuring in this way, for example, it is possible to appropriately compute the constantly changing ejection nozzle number. Also, it is possible to appropriately change capacitors used in smoothing in response to a change in the ejection nozzle number.

(Configuration 3) The inkjet printer further includes an ejection data memory that stores ejection data, which are data specifying the nozzles that are to eject an ink droplet at each of the ejection timings, wherein the inkjet head, based on the ejection data received from the ejection data memory, ejects ink droplets from the nozzles selected at each of the ejection timings and the counter, based on the ejection data, counts the number of the nozzles selected at each of the ejection timings. When configuring in this way, for example, it is possible to more appropriately carry out the computation of the ejection nozzle number.

The counter, for example, appropriately counts the number of nozzles in accordance with a timing at which the head control digital signal output unit outputs a head control digital signal. In this case, the counter, for example, counts the number of selected nozzles in synchronization with the timing at which ejection data are sent from the ejection data memory to the inkjet head.

Also, the counter may count the number of nozzles based on ejection data before they are sent to the inkjet head. In this case, the capacity specification signal output unit may, for example, prepare the value of a capacity specification signal to be output at each ejection timing in advance. When configuring in this way, for example, it is possible to appropriately count the number of nozzles even when the cycle of ink droplet ejection timings is short.

(Configuration 4) The smoothing filter further has one or more switches that open and close in response to the capacity specification signal, wherein the plural capacitors are connected in parallel between an output terminal and a ground terminal of the digital amplifier in the smoothing filter, and at least one portion of the plural capacitors is connected in series with the switches between the output terminal and ground terminal of the digital amplifier. When configuring in this way, for example, it is possible to appropriately change capacitors used in the smoothing filter in response to the capacity specification signal.

(Configuration 5) A printing method whereby printing is carried out by ink droplets being ejected includes a head control digital signal output step of outputting a head control digital signal, which is a digital signal used in controlling an operation of an inkjet head having plural nozzles and plural actuators provided corresponding one to each nozzle, a digital amplification step of, by amplifying the head control digital signal output in the head control digital signal output step, outputting an amplified control signal, which is a signal wherein the head control digital signal has been amplified, a capacity specification signal step of outputting a capacity specification signal specifying capacitors, of the plural capacitors in a smoothing filter having plural capacitors, to be used in smoothing a signal, and a smoothing step of generating a drive waveform signal, which is a signal that drives the plural actuators, by smoothing the amplified control signal using capacitors specified by the capacity specification signal, which are at least one portion of the plural capacitors of the smoothing filter, wherein, in the capacity specification signal output step, based on the number of the actuators that are to eject an ink droplet in response to the drive waveform signal, capacitors to be used in smoothing the amplified control signal are decided on, and the capacity specification signal specifying the capacitors decided on is output. When configuring in this way, for example, it is possible to obtain the same advantage as in Configuration 1. Advantage of the Invention

According to the invention, for example, it is possible to more appropriately carry out a generation of a drive waveform signal used in an actuator drive in an inkjet head.

### Brief Description of the Drawings

[Fig. 1] Fig. 1 is a block diagram showing an example of a main portion of a functional configuration of an inkjet printer 10 according to an embodiment of the invention;
[Fig. 2] Fig. 2 is a diagram showing an example of a waveform of a signal used in an ink droplet ejection control;
[Fig. 3] Fig. 3 is a diagram showing an example of a detailed configuration of a digital amplifier 14, an inkjet head 18, and a smoothing filter 16; and
[Fig. 4] Fig. 4 is a waveform diagram showing an example of an operation whereby capacitors are specified by a capacity specification signal.

### Best Mode for Carrying Out the Invention

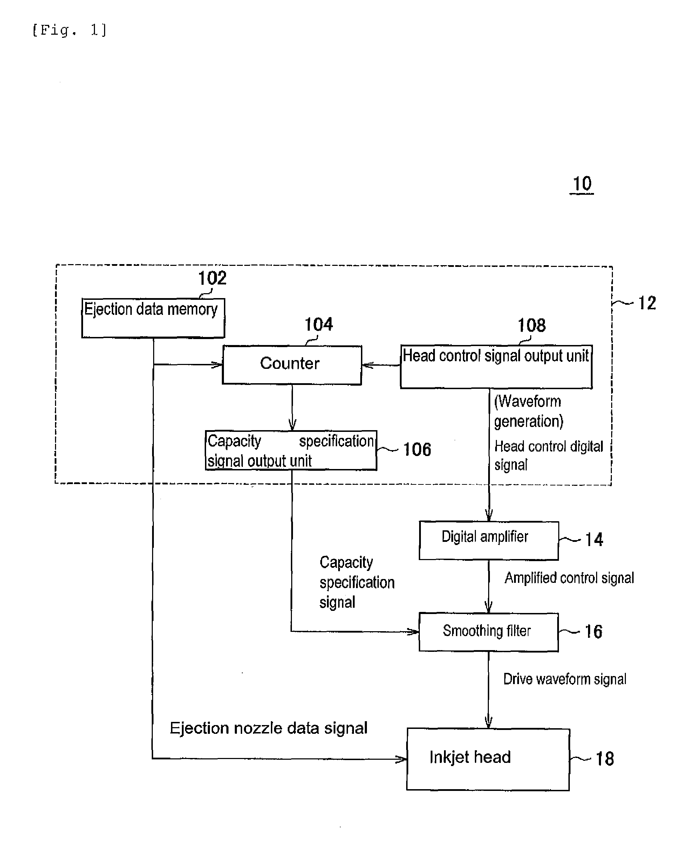

Hereafter, a description will be given, while referring to the drawings, of an embodiment according to the invention. Fig. 1 is a block diagram showing an example of a main portion of a functional configuration of an inkjet printer 10 according to an embodiment of the invention.

The inkjet printer 10 is an inkjet printer that carries out printing by ejecting ink droplets using a piezoelectric method, and includes an inkjet head 18, an ejection sequencer 12, a digital amplifier 14, and a smoothing filter 16, as a configuration carrying out ink droplet ejection and a control thereof.

The inkjet head 18 is a print head that ejects ink droplets, and carries out printing on a medium, which is a printing target, by repeatedly ejecting ink droplets while moving relative to the medium. In the example, the inkjet head 18 has plural nozzles and plural piezoelectric elements. Each of the plural piezoelectric elements is a piezoelectric actuator provided corresponding one to each nozzle, and causes an ink droplet to be ejected from the corresponding nozzle by acting in response to a drive waveform signal received from the smoothing filter 16.

Also, in the example, the inkjet head 18 receives an ejection nozzle data signal from an ejection data memory 102 in the ejection sequencer 12. The ejection nozzle data signal is, for example, a signal indicating ejection data stored in the ejection data memory 102. The ejection data are, for example, data specifying nozzles that are to eject an ink droplet at each ejection timing. Then, by selecting nozzles in accordance with the received ejection nozzle data signal, the inkjet head 18 selects nozzles that are to eject an ink droplet at each preset ejection timing. Also, the inkjet head 18 causes only the piezoelectric elements corresponding to the selected nozzles, among the plural piezoelectric elements, to receive a drive waveform signal. By so doing, the inkjet head 18, based on the ejection data, repeatedly ejects an ink droplet from nozzles, among the plural nozzles, selected at each ejection timing at the preset ejection timings.

The ejection sequencer 12 is a sequencer that controls a sequence of ink droplet ejection. In the example, the ejection sequencer 12 has the ejection data memory 102, a head control signal output unit 108, a counter 104, and a capacity specification signal output unit 106.

The ejection data memory 102 is a memory that stores ejection data. In the example, the ejection data memory 102 outputs an ejection nozzle data signal indicating a data value, among data values configuring the ejection data, corresponding to each ejection timing to the inkjet head 18 and counter 104 in accordance with each ejection timing.

The head control signal output unit 108 is a waveform generating device that emits a head control digital signal, which is a digital signal used in an inkjet head 18 operation control. The head control signal output unit 108 carries out a digital signal modulation, such as, for example, a pulse density modulation, thus generating a head digital signal. Also, in the example, the head control digital signal is a digital signal used in, for example, the generation of a drive waveform signal. The head control signal output unit 108 may also output, for example, a digital signal generated by a pulse width modulation as the head control digital signal.

The counter 104 is a counter that counts the ejection nozzle number, which is the number of nozzles selected as nozzles that eject an ink droplet. In the example, the counter 104 counts the ejection nozzle number based on an ejection nozzle data signal sent from the ejection data memory 102. By so doing, the counter 104 counts the ejection nozzle number at each ejection timing in synchronization with the timing at which ejection data are sent from the ejection data memory 102 to the inkjet head 18.

The capacity specification signal output unit 106 outputs a capacity selection signal, which is a signal controlling an operation of the smoothing filter 16, to the smoothing filter 16. The capacity selection signal is a signal that specifies capacitors, among plural capacitors provided in the smoothing filter 16, to be used in smoothing.

In the example, the capacity specification signal output unit 106 detects the ejection nozzle number at each ejection timing based on the result of a counting by the counter 104. Then, the capacity specification signal output unit 106 outputs a capacity specification signal based on the detected ejection nozzle number. By so doing, the capacity specification signal output unit 106, based on the number of actuators that are to eject an ink droplet in response to a drive waveform signal, decides on the capacitors to be used in the smoothing in the smoothing filter 16. Then, the capacity specification signal output unit 106 outputs a capacity specification signal specifying the capacitors decided on. Also, the capacity specification signal output unit 106 changes the capacity specification signal in accordance with the number of nozzles selected at each ejection timing.

The capacity specification signal output unit 106 may, for example, prepare the value of a capacity specification signal to be output at each ejection timing in advance, at a timing before an ejection nozzle data signal is sent to the inkjet head 18. In this case, the counter 104, for example, counts the ejection nozzle number at each ejection timing, based on ejection data before they are sent to the inkjet head 18.

Also, when the ejection nozzle number, that is, the number of piezoelectric elements that are to eject an ink droplet, is equal to or smaller than a preset lower limit number, the capacity specification signal output unit 106, for example, outputs a capacity specification signal specifying all the capacitors. Also, when the ejection nozzle number is greater than the lower limit number, the capacity specification signal output unit 106, for example, outputs a capacity specification signal specifying a smaller number of capacitors. In this case, the capacity specification signal output unit 106, for example, specifies capacitors in such a way that the number of capacitors specified gradually decreases every time the ejection nozzle number increases by a predetermined number. By so doing, the capacity specification signal output unit 106, for example, specifies capacitors in such a way that the greater the ejection nozzle number, the more the overall capacity decreases.

The digital amplifier 14 is an amplifier circuit that amplifies a head control digital signal output by the head control signal output unit 108. The digital amplifier 14, for example, carries out an amplification of a digital signal by converting the level of the H level signal of a digital signal to a higher voltage. Also, as a result of this amplification, the digital amplifier 14 outputs an amplified control signal, which is a signal wherein a head control digital signal has been amplified.

The smoothing filter 16 is a filter circuit that smoothes an amplified control signal received from the digital amplifier 14 and, as a result of the smoothing, generates a drive waveform signal to be supplied to the inkjet head 18. Also, in the example, the smoothing filter 16 has plural capacitors. Then, using only capacitors, among the plural capacitors, specified by a capacity specification signal received from the capacity specification signal output unit 106, the smoothing filter 16 smoothes the amplified control signal. By so doing, the smoothing filter 16 generates a drive waveform signal using capacitors in accordance with the ejection nozzle number.

According to the example, for example, it is possible to appropriately compute the constantly changing ejection nozzle number. Also, it is possible to appropriately change capacitors used in smoothing in the smoothing filter 16 in response to a change in the ejection nozzle number. Because of this, for example, even when the ejection nozzle number changes constantly, it is possible to suppress a change in the frequency characteristics of the smoothing filter 16, and appropriately prevent the waveform of the drive waveform signal from being affected.

Furthermore, by selecting capacitors in accordance with the ejection nozzle number, it is possible to keep the capacity of the capacitors used in the smoothing filter 16 at or under a certain appropriate capacity. Because of this, it is possible to appropriately carry out a reduction of power consumption. For this reason, according to the example, for example, it is possible to more appropriately carry out the generation of a drive waveform signal.

It is preferable that the number of stages at which the capacity of the smoothing filter 16 is switched is, for example, three or four. When configuring in this way, for example, it is possible to appropriately prevent a change in the ejection nozzle number from affecting the drive waveform signal. It is preferable that the capacity specification signal output unit 106, for example, specifies capacitors in such a way that the amount of capacity load of the piezoelectric elements corresponding to the nozzles selected in the inkjet head 18 is subtracted from the overall capacitor capacity of the smoothing filter 16.

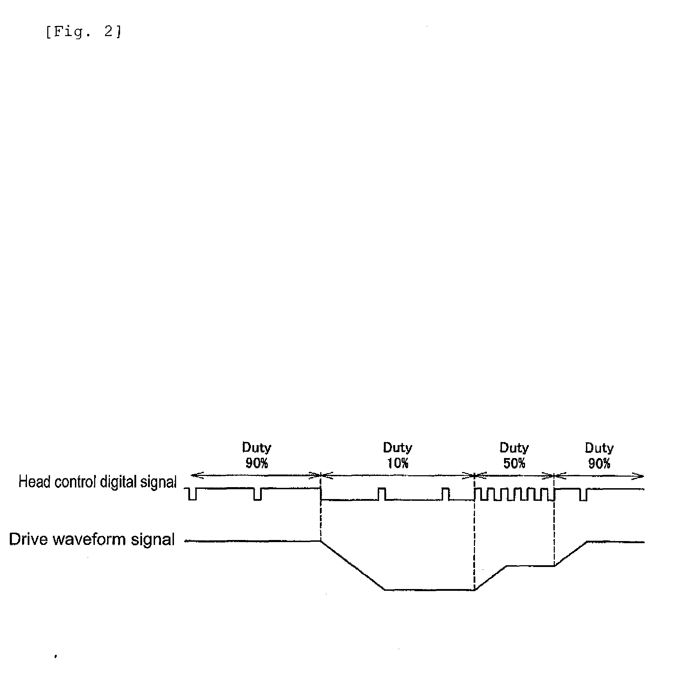

Fig. 2 shows an example of a waveform of a signal used in an ink droplet ejection control. In the example, the head control signal output unit 108 carries out a pulse density modulation, generating a head control digital signal that forms the base of a drive waveform signal. Also, the digital amplifier 14 and smoothing filter 16, by amplifying and smoothing the head control digital signal, generate a drive waveform signal that changes to a trapezoid form.

Herein, the capacity specification signal output unit 106, for example, changes the capacity specification signal in accordance with a timing at which the duty ratio (Duty) of the head control signal changes. When configuring in this way, for example, it is possible to appropriately change the capacity of the smoothing filter 16 in accordance with a timing at which the level of the drive waveform signal changes. Even in a period for which the head control signal duty ratio is constant, for example, when the ejection nozzle number changes, the capacity specification signal output unit 106 may change the capacity specification signal in response to a change in the ejection nozzle number.

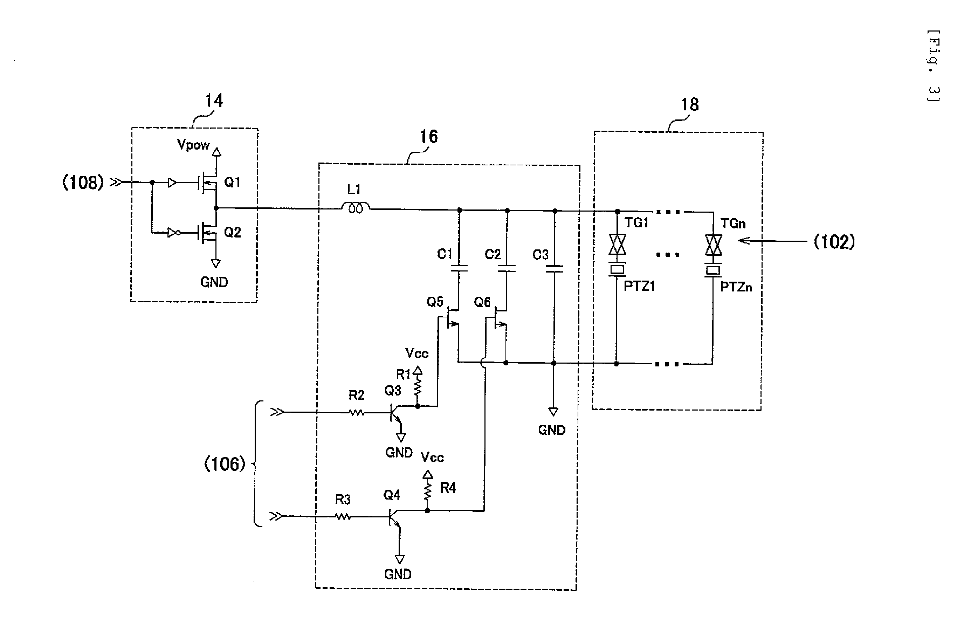

Fig. 3 shows an example of a detailed configuration of the digital amplifier 14, inkjet head 18, and smoothing filter 16.

In the example, the digital amplifier 14 is, for example, a class D amplifier circuit in which two N-type MOSFETs Q1 and Q2 are connected in series. An upstream side terminal of the series connection of the MOSFETs Q1 and Q2 receives a voltage Vpow, higher than the H level of the head control digital signal, which forms an input signal of the digital amplifier 14. Also, the upstream side terminal of the series connection is grounded. Also, the gate terminal of the MOSFET Q1 receives the head control digital signal. The gate terminal of the MOSFET Q2 receives an inversion signal of the head control digital signal. According to this configuration, the digital amplifier 14 carries out an amplification using, for example, a digital method such as a switching operation, thus amplifying the level of the head control digital signal received from the head control signal output unit 108 to the voltage Vpow.

Also, in the inkjet head 18, plural piezoelectric elements PTZ1 to PTZn are connected in parallel between an output terminal and a ground terminal of the smoothing filter 16. Also, each of the piezoelectric elements PTZ1 to PTZn is connected in series to one of transfer gates TG1 to TGn controlled by an ejection nozzle data signal received from the ejection data memory 102. According to this configuration, selected piezoelectric elements corresponding to nozzles that are to eject an ink droplet receive the same drive waveform signal from the smoothing filter 16.

The smoothing filter 16 has a coil L, plural capacitors C1 to C3, MOSFETs Q5 and Q6, transistors Q3 and Q4, and plural resistors. The plural capacitors C1 to C3 are connected in parallel between an output terminal and ground terminal of the digital amplifier 14. Also, one portion of the plural capacitors C1 to C3, the capacitors C1 and C2, are connected in series to the MOSFETs Q5 and Q6 respectively between the output terminal and ground terminal of the smoothing filter 16.

The MOSFETs Q5 and Q6 are examples of a switch that opens and closes in response to a capacity specification signal. In the example, the MOSFETs Q5 and Q6 are P-type MOSFETs. The gate terminals of the MOSFETs Q5 and Q6 are pulled up to a power source voltage Vcc via a resistor R1. Also, the gate terminals are grounded via the transistors Q3 and Q4 respectively. The transistors Q3 and Q4, being transistors that switch between on and off conditions in response to a capacity specification signal received from the capacity specification signal output unit 106, receive a capacity specification signal from the capacity specification signal output unit 106 via resistors R2 and R3 respectively.

According to this kind of configuration, when each of the transistors Q3 and Q4 is in an on condition, the gate terminal of each of the MOSFETs Q5 and Q6 is grounded via the transistors Q3 and Q4, and each of the MOSFETs Q5 and Q6 is turned on. In this case, the capacitors C1 and C2 corresponding to the turned on MOSFETs Q5 and Q6 are used in smoothing. Meanwhile, when each of the transistors Q3 and Q4 is in an off condition, the gate terminal of each of the MOSFETs Q5 and Q6 is in a pulled up condition, and each of the MOSFETs Q5 and Q6 is turned off. In this case, the capacitors C1 and C2 corresponding to the turned off MOSFETs Q5 and Q6 are cut off from the smoothing circuit, and are not used in smoothing.

Because of this, according to the example, for example, it is possible to appropriately select capacitors to be used in smoothing based on a capacity specification signal, which changes in accordance with the ejection nozzle number. Because of this, it is possible to appropriately change the capacity of the capacitors to be used in smoothing in accordance with the ejection nozzle number.

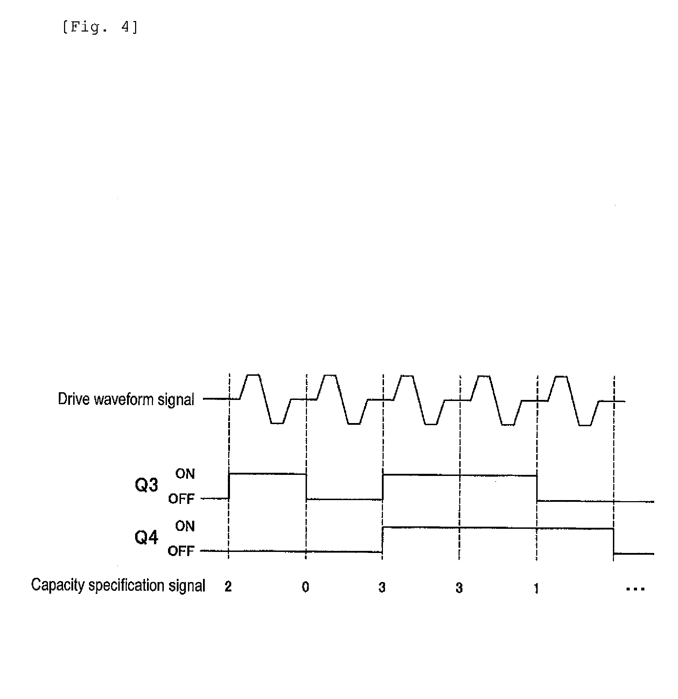

Fig. 4 is a waveform diagram showing an example of an operation whereby capacitors are specified by a capacity specification signal. In the example, the inkjet head 12 receives, as a drive waveform signal, a signal that repeats a certain waveform variation. For example, in the example, the inkjet head 12 receives a drive waveform signal that varies in the same way within each period shown delimited by broken lines in the drawing. The variation of the drive waveform signal within each period corresponds to a control causing ink droplets to be ejected from the nozzles of the inkjet head 12. In response to this kind of drive waveform signal, the inkjet head 12 ejects ink droplets from the nozzles in each period.

Also, the capacity specification signal output unit 106, coinciding with a start timing of each period, changes the value of the capacity specification signal in accordance with the number of ejection nozzles that are to eject an ink droplet during the operation in each period. For example, in the example, the capacity specification signal output unit 106 outputs a digital signal indicating one of four values - 0, 1, 2, or 3 - as the capacity specification signal at the start timing of each period. Then, the on/off condition of the transistor Q3 in the smoothing filter 16 is switched by the value of a high-order bit of the digital signal. Also, the on/off condition of the transistor Q4 in the smoothing filter 16 is switched by the value of a low-order bit.

Then, for example, the on/off condition of the transistors Q3 and Q4 switches as in the drawing in response to this kind of capacity specification signal. Also, capacitors to be used in smoothing in the smoothing filter 16 are decided on in accordance with the on/off condition of the transistors Q3 and Q4.

According to the example, for example, it is possible to appropriately change the capacity of capacitors to be used in smoothing in accordance with the ejection nozzle number. Also, because of this, for example, it is possible to suppress a change in the frequency characteristics of the smoothing filter 16 caused by a difference in the ejection nozzle number, thus appropriately preventing the waveform of the drive waveform signal from being affected.

Heretofore, a description has been given of the invention using the embodiment, but the technical scope of the invention is not limited to the scope described in the embodiment. It is evident to those skilled in the art that a wide variety of changes or improvements can be added to the heretofore described embodiment. It is evident from the descriptions in the claims that aspects to which those kinds of change or improvement are added may be included in the technical scope of the invention.

### Industrial Applicability

The invention can be preferably utilized in, for example, an inkjet printer.

### Description of Reference Numerals and Signs

10 ··· Inkjet printer, 12 ··· Ejection sequencer, 14 ··· Digital amplifier, 16· ·· Smoothing filter, 18 ··· Inkjet head, 102 ··· Ejection data memory, 104 ··· Counter, 106 ··· Capacity specification signal output unit, 108 ···ead control signal output unit

## Claims

1. An inkjet printer that carries out printing by ejecting ink droplets, the inkjet printer being **characterized by** including:
an inkjet head having a plurality of nozzles and a plurality of actuators provided corresponding one to each nozzle;
a head control digital signal output unit that outputs a head control digital signal, which is a digital signal used in controlling an operation of the inkjet;
a digital amplifier that, by amplifying the head control digital signal output by the head control digital signal output unit, outputs an amplified control signal, which is a signal wherein the head control digital signal has been amplified;
a smoothing filter that has a plurality of capacitors and, by smoothing the amplified control signal using at least one portion of the plurality of capacitors, generates a drive waveform signal, which is a signal that drives the plurality of actuators; and
a capacity specification signal output unit that outputs a capacity specification signal specifying capacitors, of the plurality of capacitors in the smoothing filter, to be used in smoothing the amplified control signal, wherein
the capacity specification signal output unit, based on the number of the actuators that are to eject an ink droplet in response to the drive waveform signal, decides on capacitors to be used in smoothing the amplified control signal, and outputs the capacity specification signal specifying the capacitors.

2. The inkjet printer according to claim 1, **characterized in that** the inkjet head repeatedly ejects an ink droplet from the nozzles, among the plurality of nozzles, selected at each ejection timing at preset ejection timings,
the inkjet printer further includes a counter that counts the number of the nozzles selected at each of the ejection timings, and
the capacity specification signal output unit, based on the number of the nozzles counted by the counter, changes the capacity specification signal in accordance with the number of the nozzles selected at each of the ejection timings.

3. The inkjet printer according to claim 2, **characterized by** further including an ejection data memory that stores ejection data, which are data specifying the nozzles that are to eject an ink droplet at each of the ejection timings, wherein
the inkjet head, based on the ejection data received from the ejection data memory, ejects ink droplets from the nozzles selected at each of the ejection timings, and
the counter, based on the ejection data, counts the number of the nozzles selected at each of the ejection timings.

4. The inkjet printer according to any of claims 1 to 3, **characterized in that** the smoothing filter further has one or more switches that open and close in response to the capacity specification signal, wherein
the plurality of capacitors are connected in parallel between an output terminal and a ground terminal of the digital amplifier in the smoothing filter, and
at least one portion of the plurality of capacitors is connected in series with the switches between the output terminal and ground terminal of the digital amplifier.

5. A printing method whereby printing is carried out by ink droplets being ejected, the printing method being **characterized by** including:
a head control digital signal output step of outputting a head control digital signal, which is a digital signal used in controlling an operation of an inkjet head having a plurality of nozzles and a plurality of actuators provided corresponding one to each nozzle;
a digital amplification step of, by amplifying the head control digital signal output in the head control digital signal output step, outputting an amplified control signal, which is a signal wherein the head control digital signal has been amplified;
a capacity specification signal step of outputting a capacity specification signal specifying capacitors, of the plurality of capacitors in a smoothing filter having a plurality of capacitors, to be used in smoothing a signal; and
a smoothing step of generating a drive waveform signal, which is a signal that drives the plurality of actuators, by smoothing the amplified control signal using capacitors specified by the capacity specification signal, which are at least one portion of the plurality of capacitors of the smoothing filter, wherein
in the capacity specification signal output step, based on the number of the actuators that are to eject an ink droplet in response to the drive waveform signal, capacitors to be used in smoothing the amplified control signal are decided on, and the capacity specification signal specifying the capacitors decided on is output.
